# EUROPÄISCHE PATENTANMELDUNG

(11) **EP 0 835 788 A1**
(43) Veröffentlichungstag der Anmeldung: **15.04.1998**
(21) Anmeldenummer: 97117327.3
(22) Anmeldetag: 07.10.1997
(51) Int. Cl.: B60R 21/20

(54) **Gassack-Abdeckung für ein Fahrzeuginsassen-Rückhaltesystem**

(30) Priorität: 11.10.1996 DE 29617721 U
(71) Anmelder: TRW Occupant Restraint Systems GmbH, 73551 Alfdorf (DE)
(72) Erfinder: Nusshör, Bernd, 73565 Spraitbach (DE)
(74) Vertreter: Sulzbach, Werner, Dipl.-Chem. Dr.

(57) **Zusammenfassung**

Die Erfindung betrifft eine Gassack-Abdeckung für ein Fahrzeuginsassen-Rückhaltesystem, die als Hauptbestandteil eine innenliegende Trägerschicht (10) und wenigstens eine mit der Trägerschicht in Verbund gebrachte Deckschicht (12) umfaßt, sowie wenigstens ein außenseitig auf der Abdeckung angeordnetes Dekor (16), dadurch gekennzeichnet, daß die Deckschicht (12) wenigstens einen Durchbruch (14) aufweist und das Dekor (16) innerhalb des Durchbruchs auf der Trägerschicht (10) angeordnet ist.

## Beschreibung

Die Erfindung betrifft eine Gassack-Abdeckung für ein Fahrzeuginsassen-Rückhaltesystem, die mit einem Dekor, beispielsweise dem Emblem eines Fahrzeugherstellers, versehen ist.

Gassack-Abdeckungen für Fahrzeuginsassen-Rückhaltesysteme werden üblicherweise als Kunststoffteile im Spritzgußverfahren hergestellt. Zur Befestigung beispielsweise der Embleme von Fahrzeugherstellern an den Abdeckungen werden normalerweise Metallplaketten verwendet, die an der Deckelplatte an einer solchen Abdeckung mit Hilfe von eingestanzten, auf der Rückseite der Deckelplatte umgebogenen Blechfahnen oder Laschen befestigt werden. Des weiteren sind Plaketten bekannt, die mittels einer Schraubverbindung oder durch Vernieten an der Abdeckung befestigt werden können. Das Emblem ist dabei üblicherweise auf einer Metallfolie aufgedruckt, die mit der Plakette verklebt ist.

Die Herstellung dieser Metallembleme ist teuer, außerdem besteht bei derartigen Plaketten immer die Gefahr des Bruchs der Verbindung zwischen dem Metallemblem und der Abdeckung bzw. zwischen der Metallfolie und der Plakette.

Aus der DE-U 295 12 551 ist eine mit einem Emblem versehene Gassack-Abdeckung für ein Fahrzeuginsassen-Rückhaltesystem bekannt, die durch direktes Bedrucken einer vorbestimmten Fläche der Abdeckung aus Kunststoff mit einer oder mehreren Druckfarben und/oder Aufprägen einer Prägefolie auf die vorbestimmte Fläche der Abdeckung erhältlich ist.

Eine derartige Abdeckung besitzt bereits Vorteile gegenüber den herkömmlichen, mit Metallemblemen versehenen Abdeckungen. Jedoch erfüllt auch diese Abdeckung noch nicht die gestiegenen Anforderungen der Fahrzeughersteller an das Design und die Variationsfähigkeit dekorierter Abdeckungsoberflächen. So sollen die Abdeckungen auf ihrer Oberfläche unterschiedliche Stylingelemente, z.B. reliefartige Strukturen und/oder ein Holzdekor neben dem Emblem des Fahrzeugherstellers, aufweisen, wobei diese unterschiedlichen Stylingelemente jedoch keine Funktionsbeeinträchtigungen und Sicherheitsrisiken hervorrufen dürfen.

Erfindungsgemäß wird daher eine Gassack-Abdeckung für ein Fahrzeuginsassen-Rückhaltesystem bereitgestellt, die als Hauptbestandteile eine innenliegende Trägersehicht und wenigstens eine mit der Trägerschicht in Verbund gebrachte Deckschicht umfaßt, sowie wenigstens ein außenseitig auf der Abdeckung angeordnetes Dekor, die dadurch gekennzeichnet ist, daß die Deckschicht wenigstens einen Durchbruch aufweist und das Dekor innerhalb des Durchbruchs auf der Trägerschicht angeordnet ist.

Bei einer bevorzugten Ausführungsform der Erfindung ragt die Trägerschicht wenigstens teilweise in den Durchbruch hinein. Sie kann jedoch im Bereich des Durchbruchs auch bündig mit der Deckschicht abschließen oder diese sogar überhöhen. Das Dekor wird in vorteilhafter Weise mit Hilfe des weiter unten beschriebenen IMD-Verfahrens (Inmoulddruck-Verfahren) aufgeprägt. Bevorzugt ist das Dekor ein Holzdekor oder das Emblem eines Fahrzeugherstellers.

Weitere Merkmale und Vorteile der Erfindung ergeben sich aus der folgenden Beschreibung besonderer Ausführungsformen unter Bezugnahme auf die beigefügte Zeichnung. In der Zeichnung zeigen:
Fig. 1 eine Draufsicht auf eine erfindungsgemäße Gassack-Abdeckung;
Fig. 2 eine Schnittansicht der Gassack-Abdeckung aus Fig. 1 entlang der Linie A-A;
Fig. 3 eine Draufsicht auf eine weitere erfindungsgemäße Gassack-Abdeckung; und
Fig. 4 eine Schnittansicht der Gassack-Abdeckung aus Fig. 3 entlang der Linie B-B.

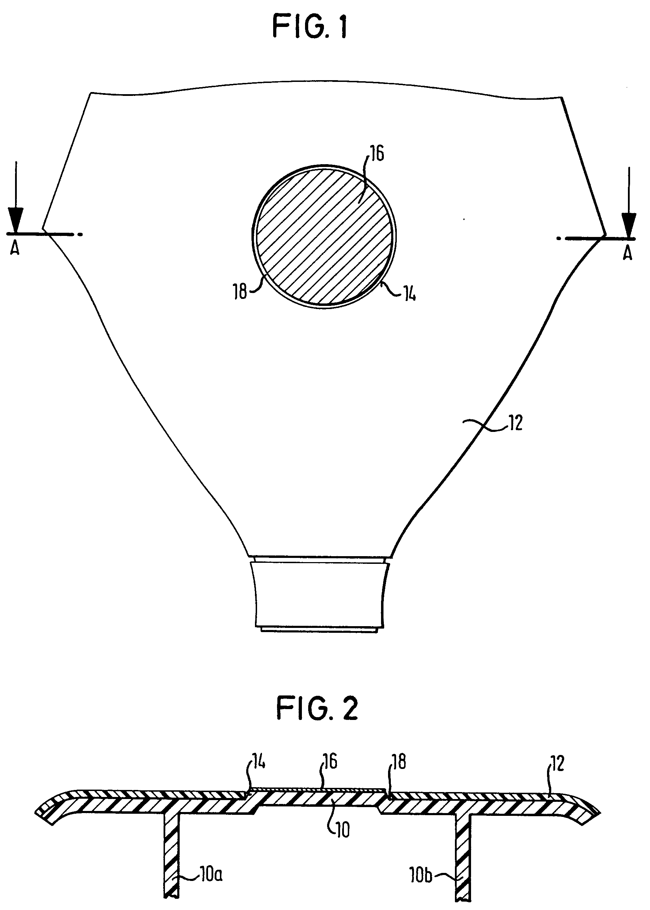

Die in den Fign. 1 und 2 dargestellte Gassack-Abdeckung umfaßt als Hauptbestandteil eine Trägerschicht 10 sowie eine außenseitige Deckschicht 12, die mit der Trägerschicht 10 in Verbund gebracht ist. An die Trägerschicht 10 sind innenseitige Stege 10a, 10b angespritzt. Die Deckschicht 12 weist einen Durchbruch 14 auf, in dessen Bereich die Trägerschicht 10 mit einem Dekor 16, vorzugsweise dem Emblem eines Fahrzeugherstellers, versehen ist. Die Deckschicht 12 kann darüber hinaus außenseitig mit einer hier nicht dargestellten Beschichtung aus einem Zweikomponenten-Urethan-Lacksystem versehen sein, das aus einem Haftvermittler und einem Decklack besteht und der Deckschicht ein angenehm weiches Berührungsempfinden verleiht.

Bei der hier gezeigten Ausführungsform ragt die Trägerschicht 10 in den in der Deckschicht 12 gebildeten Durchbruch 14 hinein, wobei die außenliegende, dekorierte Fläche der Trägersehicht die Oberfläche der Deckschicht leicht überhöht, d.h. außenseitig gegenüber der Deckschicht vorsteht. Hierdurch entsteht im Randbereich des Durchbruchs 14 ein Schattenwurf, der mögliche Unregelmäßigkeiten am Rand des Dekors 16 verdeckt. Die Außenfläche der Trägerschicht 10 kann aber auch bündig mit der Oberfläche der Deckschicht abschließen oder aber, eine Vertiefung bildend, unterhalb der Oberfläche der Deckschicht 12 verlaufen. Besonders bevorzugt ist im Randbereich des Durchbruchs 14, zwischen der Trägerschicht 10 und der Deckschicht 12, eine außenseitig offene Aussparung 18 gebildet, durch die eine reliefartige Struktur erzeugt wird. Hierdurch wird eine hohe Variationsfähigkeit in Bezug auf die Gestaltung der dekorierten Fläche gewährleistet, welche in einfacher Weise den Wünschen des Fahrzeugherstellers angepaßt werden kann.

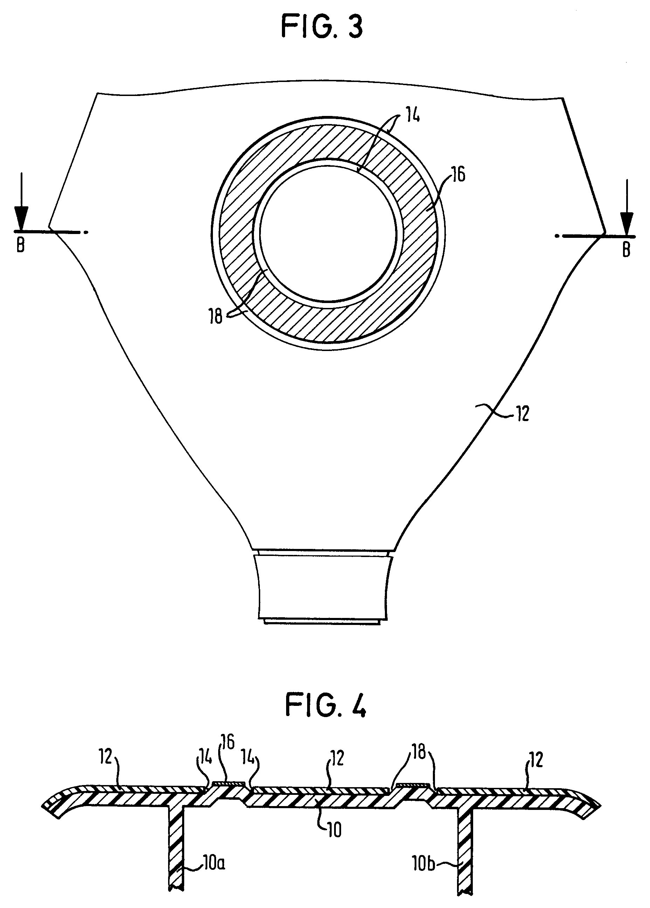

In den Figuren 3 und 4 ist eine weitere erfindungsgemäße Gassack-Abdeckung dargestellt. Die Gassack-Abdeckung umfaßt als Hauptbestandteil eine Trägerschicht 10, eine mit der Trägerschicht in Verbund gebrachte außenseitige Deckschicht 12 sowie innenseitig an die Trägerschicht 10 angespritzte Stege 10a, 10b. Der in der Deckschicht 12 vorgesehene Durchbruch 14 ist hier ringförmig ausgebildet. Die Trägerschicht 10 ragt in den Durchbruch 14 hinein und steht außenseitig gegenüber der Deckschicht 12 vor. Im Bereich des Durchbruchs 14 ist die Trägerschicht 10 auf ihrer Oberfläche mit einem Dekor 16, beispielsweise einem Holzdekor, versehen. In beiden Randbereichen des Durchbruchs 14, jeweils zwischen der Trägerschicht 10 und der Deckschicht 12, ist eine außenseitig offene Aussparung 18 gebildet, durch die eine reliefartige Struktur erzeugt wird. Die hier gezeigte Ausführungsform bietet eine Vielzahl von Gestaltungsmöglichkeiten, die in kostengünstiger Weise den Anforderungen der Fahrzeughersteller angepaßt werden können.

In den obengenannten Ausführungsformen können die Trägerschicht 10 und die Deckschicht 12 aus dem gleichen Material bestehen oder aus unterschiedlichen Materialien gebildet sein. Zur Herstellung der Deckschicht 10 und der Trägerschicht 12 können die jeweiligen, für die Herstellung von Gassack-Abdeckungen bekannten Materialien verwendet werden, wie z.B. Elastomerlegierungen eines thermoplastischen Polymers mit einem unvernetzten, teilvernetzten oder vollvernetzten Elastomer, insbesondere einem EPDM-Terpolymer, Blockcopolymere von alternierenden Polyester- und Polyetherblöcken, Blockcopolymere von Polystyrol und Polyolefin, Blockcopolymere von Polyester- oder Polyetherurethanen, thermoplastische Polyamide, Gemische von Polycarbonat und Acrylnitrilbutadienstyrol oder Gemische aus Polyamiden und Polyphenylenethern.

Das Dekor 16 ist vorzugsweise mit Hilfe des IMD-Verfahrens auf die Tragerschicht 10 aufgeprägt. Es kann jedoch auch in bekannter Weise aufgedruckt oder durch Heißprägen aufgebracht sein.

Zur Herstellung der erfindungsgemäßen Abdeckung werden die Trägerschicht 10 und die Deckschicht 12 in einem Arbeitsgang in einer Form gespritzt und gleichzeitig die innenseitigen Stege 10a und 10b angeformt. Bei Verwendung des im Prinzip bekannten IMD-Verfahrens wird zusätzlich eine Heißprägefolie durch das Spritzwerkzeug geführt. Während des Spritzgießens der Abdeckung lösen sich die Dekorschichten unter dem Einfluß von Druck und Temperatur der Kunststoff-Formmasse von der Heißprägefolie und verbinden sich fest mit dem verspritzten Substrat, hier also der Trägerschicht 10 der Gassack-Abdeckung. Das Dekor wird dabei nur an der Stelle übertragen, an der es mit dem heißen Abdeckungsmaterial in Berührung kommt, und zwar in einer kontinuierlichen Verarbeitungsweise, ohne jegliches Ausstanzen der Folie. Nach dem Abkühlen und Öffnen des Spritzwerkzeuges wird die fertig dekorierte Abdeckung automatisch von der Heißprägefolie abgelöst, die dann durch ein Folienvorschubgerät für den nächsten Spritzgußvorgang in Bereitschaft gebracht wird. Die fertig dekorierte Abdeckung wird anschließend weiter verarbeitet.

Das gemäß der Erfindung bevorzugt angewendete IMD-Verfahren eignet sich insbesondere zum Aufbringen von Holzdekoren oder anderen vollflächigen Farbstrukturen. Es kann jedoch auch zum Aufprägen von Bildern, wie z.B. den Emblemen eines Fahrzeugherstellers verwendet werden. Besonders bevorzugt ist daher das auf der Trägerschicht 10 aufgebrachte Dekor 16 ein Holzdekor oder das Emblem eines Fahrzeugherstellers.

Die erfindungsgemäße Abdeckung kann somit die unterschiedlichsten Dekorbilder aufweisen, so daß Gestaltungsvarianten herstellbar sind, die bisher nicht verwirklicht werden konnten. Bei der erfindungsgemäß vorgeschlagenen Anwendung des IMD-Verfahrens ist es darüber hinaus möglich, die dekorierten Abdeckungen in einem Arbeitsgang, ohne zusätzliche Bearbeitungsschritte herzustellen. Hierdurch können die Produktions- und Lagerkosten erheblich gesenkt werden.

## Patentansprüche

1. Gassack-Abdeckung für ein Fahrzeuginsassen-Rückhaltesystem, die als Hauptbestandteil eine innenliegende Trägerschicht (10) und wenigstens eine mit der Trägerschicht in Verbund gebrachte Deckschicht (12) umfaßt, sowie wenigstens ein außenseitig auf der Abdeckung angeordnetes Dekor (16), dadurch gekennzeichnet, daß die Deckschicht (12) wenigstens einen Durchbruch (14) aufweist und das Dekor (16) innerhalb des Durchbruchs auf der Trägerschicht (10) angeordnet ist.

2. Abdeckung nach Anspruch 1, dadurch gekennzeichnet, daß die Trägerschicht (10) wenigstens teilweise in den Durchbruch (14) hineinragt.

3. Abdeckung nach Anspruch 1 oder 2, dadurch gekennzeichnet, daß die Trägerschicht (10) den Durchbruch (14) durchdringt und außenseitig gegenüber der Deckschicht (12) vorsteht oder bündig mit dieser abschließt.

4. Abdeckung nach Anspruch 3, dadurch gekennzeichnet, daß im Randbereich des Durchbruchs 14, zwischen der Trägerschicht 10 und der Deckschicht 12, eine außenseitig offene Aussparung 18 gebildet ist.

5. Abdeckung nach einem der Ansprüche 1 bis 4, dadurch gekennzeichnet, daß das Dekor (16) mit Hilfe des IMD-Verfahrens aufgeprägt ist.

6. Abdeckung nach einem der Ansprüche 1 bis 5, dadurch gekennzeichnet, daß das Dekor (16) ein Holzdekor oder ein Emblem eines Fahrzeugherstellers ist.

7. Verfahren zur Herstellung einer Gassack-Abdeckung gemäß einem der vorhergehenden Ansprüche, gekennzeichnet durch die folgenden Schritte:
- Spritzgießen der Trägerschicht (10) und der mit einem Durchbruch (14) versehenen Deckschicht (12) in einem Spritzgußwerkzeug;
- Einführen einer mit einem Dekor (16) versehenen Heißprägefolie während des Spritzgießens in das Spritzwerkzeug; und
- Verbinden des Dekors (16) mit der Trägerschicht (10) im Bereich des Durchbruchs (14) durch Kontaktieren der Heißprägefolie mit der Trägerschicht.
